# EUROPEAN PATENT SPECIFICATION

(11) **EP 3 880 414 B1**
(45) Date of publication and mention of the grant of the patent: **23.08.2023**
(21) Application number: 19914988.1
(22) Date of filing: 12.02.2019
(51) Int. Cl.: E01C 23/22, G05D 1/02

(54) **SURFACE MARKING ROBOT**
OBERFLÄCHENMARKIERUNGSROBOTER
ROBOT DE MARQUAGE DE SURFACE

(43) Date of publication of application: 22.09.2021
(73) Proprietor: Hewlett-Packard Development Company, L.P., Spring TX 77389 (US)
(72) Inventor: HASSIDOV PLESER, Aviv, 08174 Sant Cugat del Valles (ES); NAVAS SANCHEZ, Borja, 08174 Sant Cugat del Valles (ES); VIEDMA PONCE, Ramon, 08174 Sant Cugat del Valles (ES); RODRIGUEZ AVILA, Antonio, 08174 Sant Cugat del Valles (ES)
(74) Representative: Haseltine Lake Kempner LLP
(86) International application number: PCT/US2019/017685
(87) International publication number: WO 2020/167298

(56) References cited:
- CN-U- 207 891 709
- US-A1- 2003 168 834
- US-A1- 2003 168 834
- US-A1- 2007 059 098
- US-A1- 2007 059 098
- US-B1- 6 330 503

## Description

### BACKGROUND

Surface marking robots may be used to draw or print lines on a surface by depositing print agent while moving along the surface.

US 2003/168834 A1 describes a method for producing markings on a stationary area by using a marking head, with one or more nozzles (6), arranged on a mobile device. The method comprises moving the mobile device along the surface to be marked.

US 2007/059098 A1 describes a ground marking apparatus including a carriage comprising a controllable steering and drive system and a controllable marking system, a position determining system arranged to determine the position of the carriage, and a processor to generate carriage control signals.

### BRIEF DESCRIPTION OF THE DRAWINGS

Non-limiting examples will now be described with reference to the accompanying drawings, in which:
Figure 1 shows a schematic representation of an example surface marking robot.
Figure 2 shows an example print apparatus of the surface marking robot of Figure 1.
Figure 3 shows a schematic flow chart of an example method.
Figure 4 shows a schematic flow chart of another example method.
Figure 5 shows a schematic representation of an example machine readable medium and a processor for performing example methods described herein.

### DETAILED DESCRIPTION

Surface marking robots, also referred to herein as surface marking vehicles, which may be, for example, autonomous vehicles may be used for printing images such as lines on surfaces for applications such as construction and street marking. However, factors such as uneven ground, external impacts, objects or debris in the robots trajectory, or for example wheel slippage caused by a patch of oil or similar on the ground can cause the robot to deviate from an intended path, causing inaccuracies in the position of the printed line.

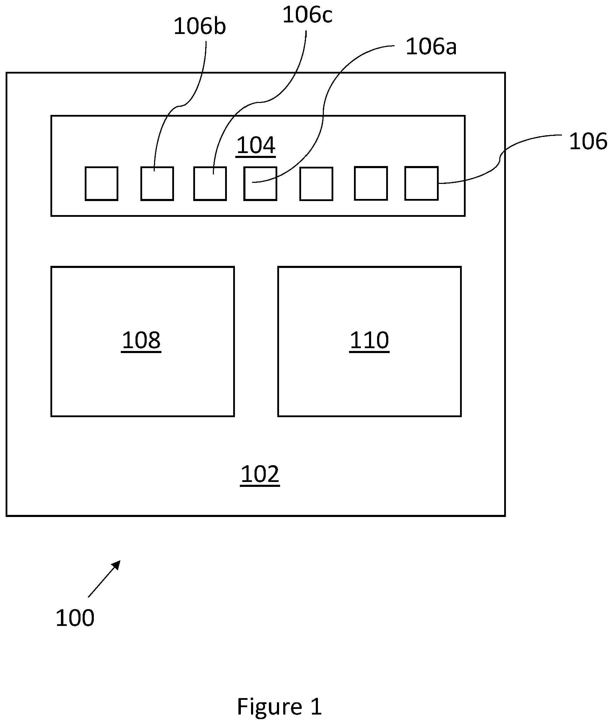

Figure 1 shows a surface marking robot 100 comprising a body 102 and a print apparatus 104 comprising a plurality of print nozzles 106 mounted on the body 102. The robot 100 also includes a motion control system 108, to cause the robot 100 to travel along the surface with an intended path or trajectory. For example, the motion control system 108 may comprise a plurality of wheels connected with a motor, or any suitable propulsion system. In some examples, the motion control system 108 may also comprise a processor to receive and execute instructions defining an intended path for the robot 100 to follow. In some examples the motion control system 108 may comprise a machine readable medium having stored instructions defining a predefined intended path for the robot 100 to follow. In other examples the motion control system 108 may define an intended path for the robot 100. In some examples, the motion control system 108 may comprise control circuitry to control wheels, a motor or other propulsion apparatus mounted on the body 102 of the robot 100 to control a direction (and in some examples, speed) of the robot 100. In some examples, the motion control system may be a microcontroller following a trajectory servo in communication with a propulsion system comprising motor driver electronics to supply force to a set of wheels.

The robot 100 also includes a position detection apparatus 110 for detecting a position of the robot 100. The position detection apparatus 110 may for example, comprise a sensor, or, in some examples, a plurality of sensors. The sensor(s) may be any kind of suitable position sensor such as rotary encoders located on wheels of the robot, a camera located on the body of the robot, a Light Detection and Ranging (LIDAR) system, an inertial mechanical unit to sense accelerations and direction of the robot, a combination including at least some of the previously-mentioned position sensors or any other suitable kind of position sensor. In some examples, information from the sensor(s) may be compared with a servo ideal path to detect deviations. For example, accelerations in an axis other than that defined by the servo ideal path can indicate that the robot is not following the defined path. In some examples a determination that rotary encoders on the robot's wheels are not increasing steadily can provide an indication that the robot has deviated from the defined path. The position detection apparatus 110 may comprise processing circuitry to determine whether a determined position matches an intended path of the robot 100, which may be held by the motion control apparatus 108. In some examples, the robot's position may be monitored by a sensor, for example a camera, located externally to the robot and the position detection apparatus may comprise a processor to receive position information for the robot. In some examples, the position detection apparatus 110 and/or the motion control apparatus 108 may determine a magnitude and direction of the difference between the robot's current position and its intended path. In some examples, detecting that the position of the robot has deviated from the intended path comprises detecting that the position of the robot has deviated from the intended path by more than a predefined threshold distance. The threshold distance may be set at, for example 2 cm. The predefined threshold distance may be, for example, set at a distance based on the distance between a first nozzle 106a of the nozzles 106 and a nozzle located adjacent to the first nozzle 106a. In some examples, the angle with which the robot turns back to the path (i.e. the direction that the robot follows when returning to the intended path) may be selected based on which angle will result in a straighter overall trajectory. In other examples, the robot may take any suitable angle that orientates it toward the intended path.

In use of the robot 100, the print apparatus 104 deposits print material onto the surface from a first nozzle 106a (for example, a central nozzle) of the plurality of nozzles 106 to form a line, as the robot 100 follows an intended path. Upon detection by the sensor that the position of the robot 100 has deviated from the intended path: the motion control system 108 performs a correction to a direction of travel of the robot 100 such that the robot 100 returns to the intended path; and the print apparatus 104 deactivates the first nozzle 106a and activate a second nozzle 106b of the plurality of nozzles 106. The second nozzle 106b is chosen such that the distance between the first and second nozzles 106a, 106b is to compensate for a deviation of the robot's position from the intended path. In some examples, the distance between the first and second nozzles may equal the distance between the robot's position and the intended path. In some examples, the second nozzle 106b may be chosen as the nearest nozzle of the plurality of nozzles to the intended path.

Switching to depositing ink from a different nozzle enables unintended deviations in the robot's path to be compensated for, which increases the accuracy of lines printed by the robot 100. Switching to a different nozzle for deposition of print agent is a faster and more accurate method than, for example, moving the nozzle 106a itself or correcting the path of the robot. Correcting the direction of the robot 100 at the same time as providing the correction of the print apparatus 104 balances providing a fast correction to small deviations from the path whilst preemptively preventing large deviations by correcting the path of the robot 100 before the intended path becomes out of reach of the nozzles 106.

In some examples, the nozzles 106 are fixed relative to the body 102, e.g. the nozzles are mounted on the body 102 rather than being mounted on a moveable print carriage. Mounting the nozzles 106 in a fixed arrangement relative to the body 102 provides a more robust arrangement than mounting on a moveable printer carriage, which improves ease of maintenance for the robot 100.

In some examples, the nozzles 106 are arranged in a row, perpendicular to a direction of travel of the robot 100. This arrangement enables a range of degrees of deviation from the intended path to be compensated for by using nozzles 106 at different positions along the row.

In some examples, the nozzles 106 are spaced from each other by a distance of between 5 and 20mm. This spacing enables even small deviations from the intended path of the robot 100 to be compensated for by switching from the first nozzle 106a to another nozzle of the plurality of nozzles 106.

In some examples, the plurality of nozzles 106 comprises between 5 and 20 nozzles. Thus, a range of deviation distances can be corrected for.

In some examples, the position detection apparatus 110 detects that the robot 100 has deviated from its intended path by: determining with the sensor the current position of the robot 100 and comparing the current position of the robot 100 with expected position information for the robot 100. In some examples, the position detection apparatus 110 is to determine a direction and magnitude of the difference between the current position and the expected position. In some examples, the position detection apparatus 110 continuously monitors the position of the robot 100. In other examples, the position detection apparatus 110 periodically detects the position of the robot 100.

In some examples, detecting that the position of the robot 100 has deviated from its intended path comprises detecting that the robot 100 has deviated from its intended path by more than a predefined threshold distance. In some examples, the predefined threshold distance may be set at a distance which is greater than half the distance between the first nozzle 106a and a nozzle located adjacent to the first nozzle 106a in the plurality of nozzles 106.

In some examples, upon detection by the position detection apparatus 110 that the robot 100 has deviated from its intended path, the print apparatus 104 may calculate which nozzle of the plurality of nozzles 106 is currently closest to a current intended path position The print apparatus 104 may then deactivate the first nozzle 106a and activate whichever of the plurality of nozzles 106 is currently closest to the intended path.

As the robot's path is corrected by the motion control apparatus 108, the distance between the intended path and the actual position of the robot 100 will decrease. In some examples, the print apparatus 104 is to, as the robot 100 returns to the intended path, deactivate the second nozzle 106b and reactivate the first nozzle 106a. That is, the print apparatus 104 stops depositing print agent from the second nozzle 106b and starts to deposit print agent from the first nozzle 106a again. This enables the printed line to be printed accurately along the intended path as the robot 100 reconverges with the intended path.

In some examples, where the first nozzle 106a and the second nozzle 106b are not located adjacent to each other, the print apparatus 104 may, in use of the robot, as the distance between the robot 100 and the intended path decreases, deactivate the second nozzle 106b, and activate a third nozzle 106c located between the first and second nozzles 106a, 106b and as the robot 100 returns to the intended path, deactivate the third nozzle 106c and reactivate the first nozzle 106a. In some examples, the print apparatus 104 is to activate and deactivate successive adjacent nozzles of the plurality of nozzles 106 in sequence as the robot 100 returns to the intended path, such that the printed line corresponds to the intended path. This may help to provide continuity or smoothness of the printed line. In some examples, the nozzle that is activated at any given time is whichever nozzle is determined to be closest to the intended path at that time. In this way, the robot 100 ensures that the line is printed along the intended path, even if the robot 100 is not following that path itself.

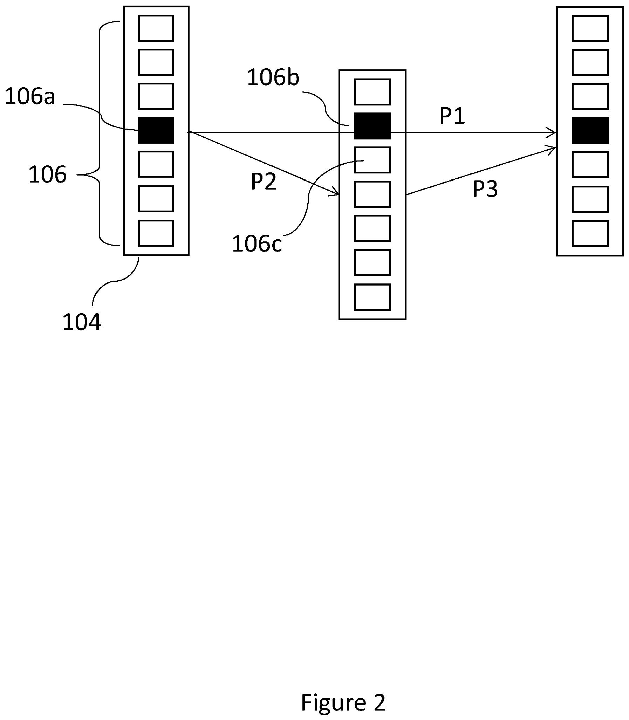

Figure 2 shows an example of the print apparatus 104 of the robot 100 of Figure 1 in use. As shown in this Figure, robot 100 initially prints a line by depositing print agent from a first, central nozzle 106a of nozzles 106 of print apparatus 104 while following an intended path, to print a line along the intended path. The robot 100 is instructed to follow intended path P1. However, the robot 100 travels along path P2 instead (for example, due to an uneven surface, wheel slippage etc.). Once a difference between the intended path P1 and the actual path P2 has been determined by position detection apparatus 110, nozzle 106a is deactivated and a second nozzle 106b is activated, which is the nozzle located nearest to the intended path P1, as determined based on the determined difference. In addition, the motion control apparatus 108 controls the motion of the robot 100 such that the robot 100 follows path P3, such that the robot 100 returns to the path P1. In some examples, the print apparatus 104 may print the line from the second nozzle 106b until the robot 100 returns to the intended path P1. In other examples, the print apparatus 104 may deactivate the second nozzle 106b once that nozzle is no longer the closest nozzle to the intended path P1 and may activate a third nozzle 106c located in between the first and second nozzles 106a, 106b. In some examples, nozzles 106 may be activated and deactivated one at a time, in sequence, as the robot 100 moves back to the intended path by activating (and therefore printing from) whichever nozzle is determined to be closest to the intended path at any given time. As the actual path P3 rejoins the intended path P1, the first nozzle 106a is reactivated to continue printing the line along the intended path. Using a first nozzle 106a that is located centrally in the plurality of nozzles 106 enables maximum error correction due to deviation in either direction. However, in some examples the first nozzle may be located in a different position (for example when deviation is more likely in one direction than another.

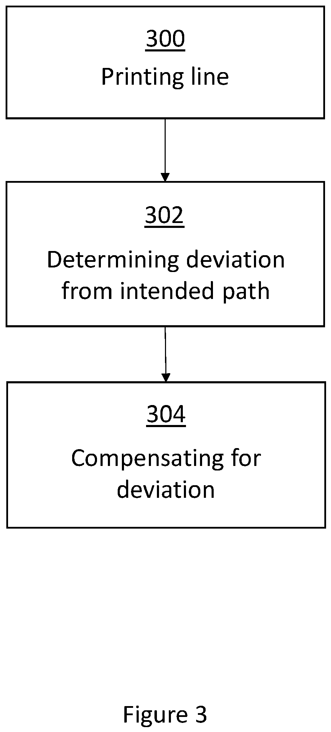

Figure 3 shows a method, which may be a method of printing a line. The method may be performed by a surface marking robot or vehicle such as the surface marking robot 100 described in relation to Figures 1 and 2. Block 300 of the method comprises printing a line by depositing ink from a first print nozzle of a plurality of print nozzles of a surface marking vehicle comprising a plurality of print nozzles and a propulsion mechanism to cause the vehicle to travel along a surface along a path. Block 302 of the method comprises determining that the vehicle has deviated from an intended path, for example by using techniques as described above. Block 304 of the method comprises compensating for the deviation by deactivating the first nozzle and depositing ink from a second nozzle, wherein the second nozzle is spaced from the first nozzle by a distance proportional to a determined offset between the position of the vehicle and the intended path while controlling the direction of the vehicle to return to the particular path.

Therefore, the method of Figure 3 provides a responsive and robust method for correcting errors in a line printed by a surface marking vehicle due to path deviation of the vehicle.

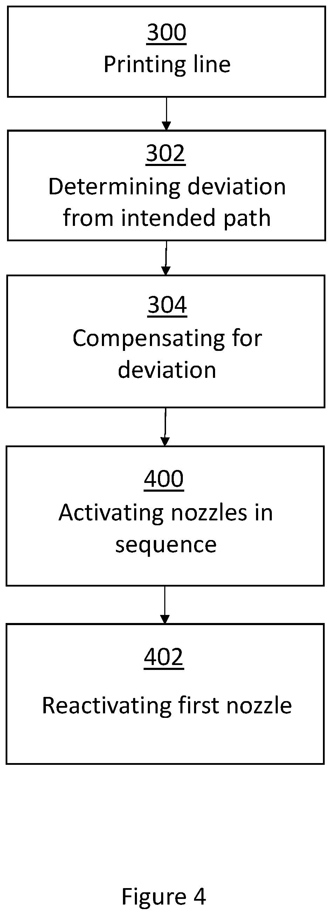

Figure 4 shows a further method, which may be a method of printing a line. The method of Figure 4 may be performed by a surface marking robot such as the surface marking robot described in relation to Figures 1 and 2. Figure 4 includes blocks 300 to 304, as described above in relation to Figure 3. Figure 4 also includes block 400 which comprises activating and deactivating successive adjacent nozzles of the plurality of nozzles in sequence as the vehicle returns to the particular path, such that the printed line corresponds to the intended path. Block 402 comprises, once the surface marking vehicle has returned to the particular path, reactivating the first nozzle.

Therefore, the method of Figure 4 returns the robot to its intended position whilst providing a high level of continuity of the printed line, and keeps printing the line along the intended path as the actual path of the robot 100 reconverges with the intended path.

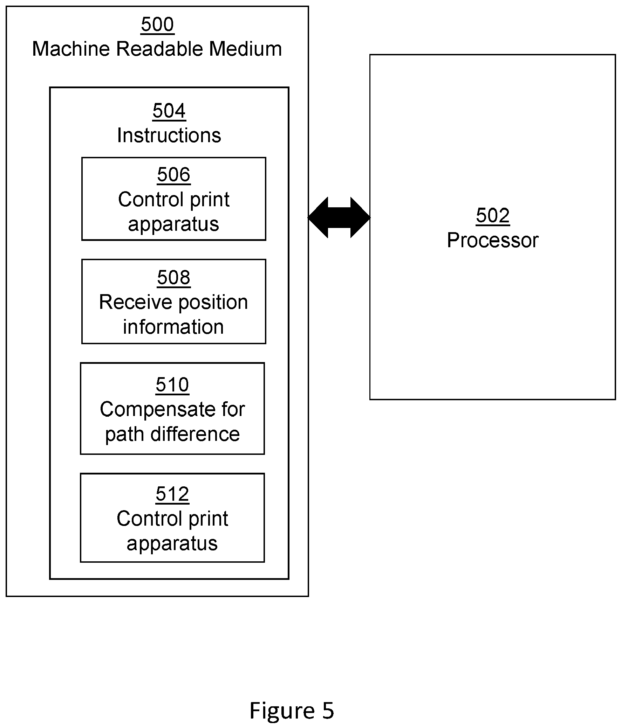

Figure 5 shows a schematic representation of a tangible machine readable medium 500 comprising instructions 504 which, when executed, cause a processor 502 to perform example processes described herein. In an example, the machine readable medium 500 comprises a set of instructions which when executed cause the processor 502 to perform a method as described with reference to Figure 3 or Figure 4. In an example, the machine readable medium 500 comprises a set of instructions 504 which, when executed by a processor 502 cause the processor 502 to control a self propelled surface marking robot to move along a path while marking a line on the surface using a print apparatus of the surface marking robot, the print apparatus comprising an arrangement of print nozzles.

The instructions 504 comprise instructions 506 to control the print apparatus to deposit print agent from a first nozzle of the arrangement of nozzle. The instructions 504 further comprise instructions 508 to receive position information for the robot. The instructions 504 also include instructions 510 to in response to detecting a difference between an intended path for the robot and an actual path of the robot, control the print apparatus to deposit print agent from a second nozzle to compensate for the difference between the intended and actual paths while adjusting a direction of the surface marking robot; and instructions 512 to, in response to detecting that the actual path has re-converged with the intended path, controlling the print apparatus to deposit print agent from the first nozzle of the plurality of nozzles.

In some examples, the machine readable medium may comprise instructions to, as the distance between the robot and the intended path decreases, deactivate the second nozzle and deposit print agent from a third nozzle located between the first and second nozzles and as the robot returns to the intended path, deactivate the third nozzle and deposit print agent from the first nozzle.

In some examples, the machine readable medium may comprise instructions to as the distance between the robot and the intended path decreases, activate and deactivate each nozzle between the second nozzle and the first nozzle in sequence such that the print agent is deposited along the intended path as the actual path returns to the intended path.

In some examples, the machine readable medium 500 may form part of a surface marking robot, e.g. the surface marking robot 100 of Figure 1. In other examples, the machine readable medium 500 may be located externally to the robot 100, and be in communication with the robot using a wireless communication system such as Wi-Fi, Bluetooth, or any suitable communication system. The present disclosure is described with reference to flow charts. Although the flow charts described above show a specific order of execution, the order of execution may differ from that which is depicted. Blocks described in relation to one flow chart may be combined with those of another flow chart.

It shall be understood that some blocks in the flow charts can be realized using machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode. Further, some teachings herein may be implemented in the form of a computer software product, the computer software product being stored in a storage medium and comprising a plurality of instructions for making a computer device implement the methods recited in the examples of the present disclosure.

The preceding description has been presented to illustrate and describe examples of the principles described. This description is not intended to be exhaustive or to limit these principles to any precise form disclosed. Many modifications and variations are possible in light of the above teaching. It is to be understood that any feature described in relation to any one example may be used alone, or in combination with other features described, and may also be used in combination with any features of any other of the examples, or any combination of any other of the examples.

## Claims

1. A surface marking robot (100) comprising:
a body (102);
a print apparatus (104) comprising a plurality of print nozzles (106) mounted on the body;
a position detection apparatus (110) to determine a position of the robot;
a motion control system (108), to cause the robot to travel along the surface with an intended path; and
wherein the print apparatus is to deposit print agent onto the surface from a first nozzle (106a) of the plurality of nozzles to form a line as the robot follows the intended path,
wherein upon detection by the position detection apparatus that the position of the robot has deviated from the intended path:
(i) the motion control system is to perform a correction to a direction of travel of the robot such that the robot returns to the intended path; and
(ii) the print apparatus is to deactivate the first nozzle (106a) and activate a second nozzle (106b) of the plurality of nozzles,
**characterised in that**
the second nozzle is chosen such that a distance between the first and second nozzles is to compensate for a deviation of the robot's position from the intended path.

2. A surface marking robot according to claim 1, wherein the nozzles are fixed relative to the body.

3. A surface marking robot according to claim 1, wherein the nozzles (106) are arranged in a row, perpendicular to a direction of motion of the robot.

4. A surface marking robot according to claim 1, wherein the print apparatus is to, as the robot returns to the intended path, deactivate the second nozzle (106b) and reactivate the first nozzle (106a).

5. A surface marking robot according to claim 4, wherein the print apparatus is to, as the distance between the robot and the intended path decreases, deactivate the second nozzle and activate a third nozzle (106c) located between the first and second nozzles and as the robot returns to the intended path, deactivate the third nozzle and reactivate the first nozzle.

6. A surface marking robot according to claim 1, wherein the plurality of nozzles (106) are spaced from each other in a direction perpendicular to a direction of motion of the robot, by a distance of between 5 and 20mm.

7. A surface marking robot according to claim 1, wherein the plurality of nozzles (106) comprises between 5 and 20 nozzles.

8. A surface marking robot according to claim 1, wherein detection that the position of the robot has deviated from the intended path comprises detecting that the position of the robot has deviated from the intended path by more than a predefined threshold distance.

9. A method comprising:
printing (300) a line by depositing print agent from a first print nozzle of a plurality of print nozzles of a surface marking robot comprising a plurality of print nozzles and a propulsion mechanism to cause the robot to travel along a surface along a path; and
determining (302) that the robot has deviated from an intended path, the method **characterized in that**:
compensating (304) for the deviation by deactivating the first nozzle and depositing print agent from a second nozzle, wherein the second nozzle is spaced from the first nozzle by a distance proportional to a determined offset between a position of the robot and the intended path while controlling a direction of the robot to return to the intended path.

10. A method according to claim 9, comprising, once the surface marking robot has returned to the intended path, reactivating the first nozzle (106a).

11. A method according to claim 9 comprising activating and deactivating (400) successive adjacent nozzles of the plurality of nozzles in sequence as the surface marking robot returns to the intended path, such that a line printed by the surface marking robot as the surface marking robot returns to the intended path is printed along the intended path.

12. A method according to claim 9 wherein the second nozzle is chosen from the plurality of nozzles (106) such that the determined offset corresponds to a distance between the first and second nozzles.

13. A tangible machine readable medium (500) comprising a set of instructions (504) which, when executed by a processor (502) cause the processor to:
control a self propelled surface marking robot (100) to move along a path while marking a line on the surface using a print apparatus of the surface marking robot, the print apparatus comprising an arrangement of print nozzles;
control the print apparatus to deposit print agent from a first nozzle of the arrangement of nozzles; and
receive position information for the surface marking robot,
**characterized in that** in response to detecting a difference between an intended path for the surface marking robot and an actual path of the surface marking robot;
control the print apparatus to deposit print agent from a second nozzle to compensate for the difference between the intended and actual paths while adjusting a direction of the surface marking surface marking robot; and
in response to detecting that the actual path has re-converged with the intended path, controlling the print apparatus to deposit print agent from the first nozzle of the arrangement of nozzles.

14. A tangible machine readable medium according to claim 13, further comprising instructions to, as the distance between the surface marking robot and the intended path decreases, deactivate the second nozzle (106b) and deposit print agent from a third nozzle (106c) located between the first and second nozzles and as the surface marking robot returns to the intended path, deactivate the third nozzle and deposit print agent from the first nozzle (106a).

15. A tangible machine readable medium according to claim 13, further comprising instructions to, as the distance between the surface marking robot and the intended path decreases, activate and deactivate each nozzle between the second nozzle (106b) and the first nozzle (106a) in sequence such that the print agent is deposited along the intended path as the actual path returns to the intended path.

## Patentansprüche

1. Oberflächenmarkierungsroboter (100), der Folgendes umfasst:
einen Körper (102);
eine Druckvorrichtung (104), die eine Vielzahl von Druckdüsen (106), die an dem Körper montiert sind, umfasst;
eine Positionserfassungsvorrichtung (110), um eine Position des Roboters zu bestimmen;
ein Bewegungssteuersystem (108), um den Roboter zu veranlassen, sich entlang der Oberfläche mit einem beabsichtigten Pfad fortzubewegen; und
wobei die Druckvorrichtung dazu dient, Druckmittel von einer ersten Düse (106a) der Vielzahl von Düsen auf die Oberfläche abzuscheiden, um eine Linie auszubilden, wenn der Roboter dem beabsichtigten Pfad folgt,
wobei bei einem Erfassen durch die Positionserfassungsvorrichtung, dass die Position des Roboters von dem beabsichtigten Pfad abgewichen ist:
(i) das Bewegungssteuersystem dazu dient, eine Korrektur an einer Fortbewegungsrichtung des Roboters derart durchzuführen, dass der Roboter zu dem beabsichtigten Pfad zurückkehrt; und
(ii) die Druckvorrichtung dazu dient, die erste Düse (106a) zu deaktivieren und
eine zweite Düse (106b) der Vielzahl von Düsen zu aktivieren,
**dadurch gekennzeichnet, dass**
die zweite Düse derart gewählt ist, dass ein Abstand zwischen der ersten und der zweiten Düse dazu dient, eine Abweichung der Position des Roboters von dem beabsichtigten Pfad zu kompensieren.

2. Oberflächenmarkierungsroboter nach Anspruch 1, wobei die Düsen (106) relativ zu dem Körper fixiert sind.

3. Oberflächenmarkierungsroboter nach Anspruch 1, wobei die Düsen (106) in einer Reihe senkrecht zu einer Bewegungsrichtung des Roboters angeordnet sind.

4. Oberflächenmarkierungsroboter nach Anspruch 1, wobei die Druckvorrichtung dazu dient, wenn der Roboter zu dem beabsichtigten Pfad zurückkehrt, die zweite Düse (106b) zu deaktivieren und die erste Düse (106a) erneut zu aktivieren.

5. Oberflächenmarkierungsroboter nach Anspruch 4, wobei die Druckvorrichtung dazu dient, wenn der Abstand zwischen dem Roboter und dem beabsichtigten Pfad abnimmt, die zweite Düse zu deaktivieren und eine dritte Düse (106c), die sich zwischen der ersten und der zweiten Düse befindet, zu aktivieren, und wenn der Roboter zu dem beabsichtigten Pfad zurückkehrt, die dritte Düse zu deaktivieren und die erste Düse erneut zu aktivieren.

6. Oberflächenmarkierungsroboter nach Anspruch 1, wobei die Vielzahl von Düsen (106) in einer Richtung senkrecht zu einer Bewegungsrichtung des Roboters um einen Abstand von zwischen 5 und 20 mm voneinander beabstandet sind.

7. Oberflächenmarkierungsroboter nach Anspruch 1, wobei die Vielzahl von Düsen (106) zwischen 5 und 20 Düsen umfasst.

8. Oberflächenmarkierungsroboter nach Anspruch 1, wobei ein Erfassen, dass die Position des Roboters von dem beabsichtigten Pfad abgewichen ist, ein Erfassen umfasst, dass die Position des Roboters von dem beabsichtigten Pfad um mehr als einen vordefinierten Schwellenabstand abgewichen ist.

9. Verfahren, das Folgendes umfasst:
Drucken (300) einer Linie durch Abscheiden von Druckmittel aus einer ersten Druckdüse einer Vielzahl von Druckdüsen eines Oberflächenmarkierungsroboters, der eine Vielzahl von Druckdüsen und einen Antriebsmechanismus umfasst, um den Roboter zu veranlassen, sich entlang einer Oberfläche entlang eines Pfads fortzubewegen; und
Bestimmen (302), dass der Roboter von einem beabsichtigten Pfad abgewichen ist, wobei das Verfahren **gekennzeichnet ist durch**:
Kompensieren (304) der Abweichung **durch** Deaktivieren der ersten Düse und
Abscheiden von Druckmittel aus einer zweiten Düse, wobei die zweite Düse von der ersten Düse um einen Abstand, der proportional zu einem bestimmten Versatz zwischen einer Position des Roboters und dem beabsichtigten Pfad ist, beabstandet ist, während eine Richtung des Roboters gesteuert wird, um zu dem beabsichtigten Pfad zurückzukehren.

10. Verfahren nach Anspruch 9, das, sobald der Oberflächenmarkierungsroboter zu dem beabsichtigten Pfad zurückgekehrt ist, ein erneutes Aktivieren der ersten Düse (106a) umfasst.

11. Verfahren nach Anspruch 9, das ein Aktivieren und ein Deaktivieren (400) aufeinanderfolgender benachbarter Düsen der Vielzahl von Düsen der Reihe nach umfasst, wenn der Oberflächenmarkierungsroboter zu dem beabsichtigten Pfad zurückkehrt, derart, dass eine Linie, die durch den Oberflächenmarkierungsroboter gedruckt wird, wenn der Oberflächenmarkierungsroboter zu dem beabsichtigten Pfad zurückkehrt, entlang des beabsichtigten Pfads gedruckt wird.

12. Verfahren nach Anspruch 9, wobei die zweite Düse aus der Vielzahl von Düsen (106) derart ausgewählt ist, dass der bestimmte Versatz einem Abstand zwischen der ersten und der zweiten Düse entspricht.

13. Greifbares maschinenlesbares Medium (500), das einen Satz Anweisungen (504) umfasst, die, wenn sie durch einen Prozessor (502) ausgeführt werden, den Prozessor zu Folgendem veranlassen:
Steuern eines selbstangetriebenen Oberflächenmarkierungsroboters (100), um sich entlang eines Pfads zu bewegen, während eine Linie auf der Oberfläche unter Verwendung einer Druckvorrichtung des Oberflächenmarkierungsroboters markiert wird, wobei die Druckvorrichtung eine Anordnung von Druckdüsen umfasst;
Steuern der Druckvorrichtung, um Druckmittel aus einer ersten Düse der Anordnung von Düsen abzuscheiden; und
Empfangen von Positionsinformationen für den Oberflächenmarkierungsroboter,
**gekennzeichnet durch,** als Reaktion auf ein Erfassen eines Unterschieds zwischen einem beabsichtigten Pfad für den Oberflächenmarkierungsroboter und einem tatsächlichen Pfad des Oberflächenmarkierungsroboters;
Steuern der Druckvorrichtung, um Druckmittel aus einer zweiten Düse abzuscheiden, um den Unterschied zwischen dem beabsichtigten und dem tatsächlichen Pfad zu kompensieren, während eine Richtung des oberflächenmarkierenden Oberflächenmarkierungsroboters angepasst wird; und
als Reaktion auf ein Erfassen, dass der tatsächliche Pfad mit dem beabsichtigten Pfad erneut konvergiert hat, Steuern der Druckvorrichtung, um Druckmittel aus der ersten Düse der Anordnung von Düsen abzuscheiden.

14. Greifbares maschinenlesbares Medium nach Anspruch 13, ferner umfassend Anweisungen, um, wenn der Abstand zwischen dem Oberflächenmarkierungsroboter und dem beabsichtigten Pfad abnimmt, die zweite Düse (106b) zu deaktivieren und Druckmittel aus einer dritten Düse (106c), die sich zwischen der ersten und der zweiten Düse befindet, abzuscheiden, und
wenn der Oberflächenmarkierungsroboter zu dem beabsichtigten Pfad zurückkehrt, Deaktivieren der dritten Düse und Abscheiden des Druckmittels aus der ersten Düse (106a).

15. Greifbares maschinenlesbares Medium nach Anspruch 13, ferner umfassend Anweisungen, um, wenn der Abstand zwischen dem Oberflächenmarkierungsroboter und dem beabsichtigten Pfad abnimmt, jede Düse zwischen der zweiten Düse (106b) und der ersten Düse (106a) der Reihe nach derart zu aktivieren und zu deaktivieren, dass das Druckmittel entlang des beabsichtigten Pfads abgeschieden wird, wenn der tatsächliche Pfad zu dem beabsichtigten Pfad zurückkehrt.

## Revendications

1. Robot de marquage de surface (100) comprenant :
un corps (102) ;
un appareil d'impression (104) comprenant une pluralité de buses d'impression (106) montées sur le corps ;
un appareil de détection de position (110) destiné à déterminer une position du robot ;
un système de commande de mouvement (108), destiné à amener le robot à se déplacer le long de la surface avec une trajectoire prévue ; et
dans lequel l'appareil d'impression est destiné à déposer un agent d'impression sur la surface à partir d'une première buse (106a) de la pluralité de buses pour former une ligne lorsque le robot suit la trajectoire prévue,
dans lequel, lorsque l'appareil de détection de position détecte que la position du robot a dévié de la trajectoire prévue :
(i) le système de commande de mouvement est destiné à apporter une correction à un sens de déplacement du robot de telle sorte que le robot revient sur la trajectoire prévue ; et
(ii) l'appareil d'impression est destiné à désactiver la première buse (106a) et à
activer une deuxième buse (106b) de la pluralité de buses, **caractérisé en ce que**
la deuxième buse est choisie de telle sorte qu'une distance entre les première et deuxième buses est destinée à compenser une déviation de la position du robot par rapport à la trajectoire prévue.

2. Robot de marquage de surface selon la revendication 1, dans lequel les buses (106) sont fixes par rapport au corps.

3. Robot de marquage de surface selon la revendication 1, dans lequel les buses (106) sont disposées en une rangée, perpendiculaire à une direction de mouvement du robot.

4. Robot de marquage de surface selon la revendication 1, dans lequel l'appareil d'impression est destiné, lorsque le robot revient sur la trajectoire prévue, à désactiver la deuxième buse (106b) et à réactiver la première buse (106a).

5. Robot de marquage de surface selon la revendication 4, dans lequel l'appareil d'impression est destiné, lorsque la distance entre le robot et la trajectoire prévue diminue, à désactiver la deuxième buse et à activer une troisième buse (106c) située entre les première et deuxième buses, et lorsque le robot revient sur la trajectoire prévue, à désactiver la troisième buse et à réactiver la première buse.

6. Robot de marquage de surface selon la revendication 1, dans lequel la pluralité de buses (106) sont espacées les unes des autres dans une direction perpendiculaire à une direction de mouvement du robot, d'une distance comprise entre 5 et 20 mm.

7. Robot de marquage de surface selon la revendication 1, dans lequel la pluralité de buses (106) comprennent entre 5 et 20 buses.

8. Robot de marquage de surface selon la revendication 1, dans lequel une détection de la déviation de la position du robot de la trajectoire prévue comprend la détection de la déviation de la position du robot de la trajectoire prévue de plus d'une distance seuil prédéfinie.

9. Procédé comprenant :
l'impression (300) d'une ligne en déposant un agent d'impression à partir d'une première buse d'impression d'une pluralité de buses d'impression d'un robot de marquage de surface comprenant une pluralité de buses d'impression et un mécanisme de propulsion pour amener le robot à se déplacer le long d'une surface le long d'une trajectoire ; et
la détermination (302) de la déviation du robot d'une trajectoire prévue, le procédé étant **caractérisé en ce que** :
la compensation (304) de la déviation en désactivant la première buse et
le dépôt d'un agent d'impression à partir d'une deuxième buse, dans lequel la deuxième buse est espacée de la première buse d'une distance proportionnelle à un décalage déterminé entre une position du robot et la trajectoire prévue tout en commandant une direction du robot pour qu'il revienne sur la trajectoire prévue.

10. Procédé selon la revendication 9, comprenant, une fois que le robot de marquage de surface est revenu sur la trajectoire prévue, la réactivation de la première buse (106a).

11. Procédé selon la revendication 9, comprenant l'activation et la désactivation (400) de buses adjacentes successives de la pluralité de buses en séquence lorsque le robot de marquage de surface revient sur la trajectoire prévue, de telle sorte qu'une ligne imprimée par le robot de marquage de surface, à mesure que le robot de marquage de surface revient sur la trajectoire prévue, est imprimée le long de la trajectoire prévue.

12. Procédé selon la revendication 9, dans lequel la deuxième buse est choisie parmi la pluralité de buses (106) de telle sorte que le décalage déterminé correspond à une distance entre les première et deuxième buses.

13. Support tangible lisible par machine (500) comprenant un ensemble d'instructions (504) qui, lorsqu'elles sont exécutées par un processeur (502), amènent le processeur à :
commander un robot de marquage de surface automoteur (100) pour qu'il se déplace le long d'une trajectoire tout en marquant une ligne sur la surface à l'aide d'un appareil d'impression du robot de marquage de surface, l'appareil d'impression comprenant un agencement de buses d'impression ;
commander l'appareil d'impression pour qu'il dépose un agent d'impression à partir d'une première buse de l'agencement de buses ; et
recevoir des informations de position pour le robot de marquage de surface,
**caractérisé par,** en réponse à la détection d'une différence entre une trajectoire prévue pour le robot de marquage de surface et une trajectoire réelle du robot de marquage de surface ;
la commande de l'appareil d'impression pour qu'il dépose un agent d'impression à partir d'une deuxième buse pour compenser la différence entre les trajectoires prévues et réelles tout en ajustant une direction du robot de marquage de surface de marquage de surface ; et
en réponse à la détection de la reconvergence de la trajectoire réelle avec la trajectoire prévue, la commande de l'appareil d'impression pour qu'il dépose un agent d'impression à partir de la première buse de l'agencement de buses.

14. Support tangible lisible par machine selon la revendication 13, comprenant en outre des instructions destinées, lorsque la distance entre le robot de marquage de surface et la trajectoire prévue diminue, à désactiver la deuxième buse (106b) et à déposer un agent d'impression à partir d'une troisième buse (106c) située entre les première et deuxième buses, et
lorsque le robot de marquage de surface revient sur la trajectoire prévue, à désactiver la troisième buse et à déposer l'agent d'impression à partir de la première buse (106a).

15. Support tangible lisible par machine selon la revendication 13, comprenant en outre des instructions destinées, lorsque la distance entre le robot de marquage de surface et la trajectoire prévue diminue, à activer et à désactiver chaque buse entre la deuxième buse (106b) et la première buse (106a) en séquence de telle sorte que l'agent d'impression est déposé le long de la trajectoire prévue lorsque la trajectoire réelle revient sur la trajectoire prévue.
